Europäisches Patentamt

European Patent Office

Office européen des brevets

(19)

(11) **EP 0 779 167 B1**

(12) **EUROPÄISCHE PATENTSCHRIFT**

(45) Veröffentlichungstag und Bekanntmachung des Hinweises auf die Patenterteilung:
**08.01.2003  Patentblatt 2003/02**

(51) Int Cl.$^7$: **B60G 17/052**, B60G 17/015

(21) Anmeldenummer: **96118354.8**

(22) Anmeldetag: **15.11.1996**

(54) **Niveauregeleinrichtung**

Level control device

Dispositif de réglage du niveau

(84) Benannte Vertragsstaaten:
**DE FR GB IT SE**

(30) Priorität: **14.12.1995  DE 19546728**

(43) Veröffentlichungstag der Anmeldung:
**18.06.1997   Patentblatt 1997/25**

(73) Patentinhaber: **WABCO GmbH & Co. OHG**
**30453 Hannover (DE)**

(72) Erfinder:
  • **Lentz, Uwe**
    **31535 Neustadt (DE)**
  • **Zimpel, Dieter**
    **31535 Neustadt (DE)**

(74) Vertreter: **Schrödter, Manfred, Dipl.-Ing.**
    **WABCO GmbH & Co. OHG**
    **Postfach 91 12 62**
    **30432 Hannover (DE)**

(56) Entgegenhaltungen:
**EP-A- 0 318 013      EP-A- 0 372 218**
**DE-A- 4 001 485      DE-A- 4 003 188**
**DE-A- 4 017 222      DE-A- 4 112 738**
**DE-A- 4 138 831**

• **PATENT ABSTRACTS OF JAPAN vol. 016, no. 335 (M-1283), 21.Juli 1992 & JP 04 100712 A (NISSAN MOTOR CO LTD), 2.April 1992,**
• **PATENT ABSTRACTS OF JAPAN vol. 013, no. 083 (M-802), 27.Februar 1989 & JP 63 279914 A (FUJI HEAVY IND LTD), 17.November 1988,**
• **PATENT ABSTRACTS OF JAPAN vol. 013, no. 415 (M-870), 13.September 1989 & JP 01 153315 A (AISIN SEIKI CO LTD), 15.Juni 1989,**
• **PATENT ABSTRACTS OF JAPAN vol. 017, no. 012 (M-1351), 11.Januar 1993 & JP 04 243612 A (TOKICO LTD), 31.August 1992,**
• **PATENT ABSTRACTS OF JAPAN vol. 096, no. 002, 29.Februar 1996 & JP 07 266824 A (TOYOTA MOTOR CORP), 17.Oktober 1995,**

**Beschreibung**

Die Erfindung betrifft eine mit Druckmittel arbeitende Niveauregeleinrichtung gemäß dem Oberbegriff des Patentanspruchs 1.

Eine derartige Niveauregeleinrichtung ist durch die

VDI-Berichte Nr. 744, 1989, "Elektronisch gesteuerte Luftfederung und Dämpferregelung" von Dr. K.-H. Schönfeld, VDI, und H. Geiger

bekannt.

In der bekannten Schrift ist beschrieben, daß ein neues Soll-Niveau des Fahrzeugaufbaus für eine oder mehrere Achsen unter Verwendung einer Fernbedienung eingestellt und gespeichert wird. Es wird weiter beschrieben, daß das Soll-Niveau für eine Achse im Bereich zwischen zwei Grenzen, nämlich einer einprogrammierten unteren und einer einprogrammierten oberen Höhenbegrenzung liegen kann. Im Bedarfsfall kann statt der unteren Höhengrenze auch ein Gummipufferanschlag angefahren werden, wozu eine entsprechende Parametervorwahl erforderlich ist.

Der durch die Gummipuffer festgelegte Anschlag wird dadurch erreicht, daß die entsprechenden Luftfederbälge vollständig entlüftet sind, d. h. dieser Anschlag stellt die untere Grenze der Verstellmöglichkeit überhaupt dar.

Durch die Veröffentlichung

SAE TECHNICAL PAPER SERIES 912671, "Electronically Controlled Air Suspension (ECAS) for Commercial Vehicles" von Karl-H. Schönfeld, Hartmut Geiger und Karl-H. Hesse, 1991

ist weiterhin bekannt, bei einer gattungsgemäßen Einrichtung die Abstände zwischen den ungefederten Achsen und dem gefederten Fahrzeugaufbau mit Hilfe von Höhensensoren zu messen.

Im eingangs zitierten Stand der Technik wird unter dem Begriff "Niveau" der Abstand des gefederten Fahrzeugaufbaus über den ungefederten Achsen verstanden; bezüglich einer Achse bewirkt die Niveauregelung, daß sich zwischen Achse und dem Fahrzeugaufbau ein Abstand einstellt, der gleich dem für diese Achse mit Hilfe der Fernbedienung eingespeicherten Soll-Niveau ist.

Durch die DE 40 03 188 A1 ist ein aktives hydropneumatisches Aufhängungssystem bekannt, bei dem sich das Fahrzeugchassis über einzelne Aufhängungen an den Fahrzeugrädern abstützt. Eine Aufhängung besteht aus einem Hydraulikzylinder, in dessen Öl-Zylinderkammer [dort (F)] über hydraulische Ventilmittel Öl zu- bzw. abgeführt werden kann, und dessen Extension die Höhe des Fahrzeugchassis über den Rädern bestimmt. Am Hydraulikzylinder ist ein Luftfederteil [dort (D)] befestigt, mit einer Luftkammer [dort (B)] und einer von der Luftkammer durch eine Membran [dort (C)] abgetrennten Ölkammer [dort (A)], welche über eine Drossel mit der Zylinder-Ölkammer verbunden ist, so daß die Drossel die Dämpfung und die Luftkammer (durch ihre volumetrische Elastizität) die Federung einer Aufhängung für das Fahrzeugchassis bewirken. Über Aufhängungsfühler [dort (13)] werden relative Aufwärts- und Abwärtsverschiebungen jeder Aufhängung zwischen dem zugehörigen Rad und der Fahrzeugkarosserie erfaßt und zusätzlich werden über Vertikal- und Querbeschleunigungsfühler Fahrzeugbeschleunigungen bestimmt. Eine Steuereinrichtung [dort (3)] verarbeitet die Sensordaten und steuert die Ventilmittel für den Eintritt oder den Austritt von Öl bezüglich jeder Aufhängung; die gewünschte Fahrzeughöhe wird dabei über einen Höhenschalter [dort (12)] vorgewählt. Durch die Steuerung der Zufuhr und Abfuhr von Öl zu und von jeder der Aufhängungen werden Wank-, Roll-, Hock-, Niederlaß- oder Bremsstauchbewegungen vermindert.

Bei deformierter oder verworfener Straßenoberfläche liegt ein Ungleichgewicht in den Berührungslasten der Räder vor: Die Berührungslasten von zwei diagonal einander gegenüberliegenden Reifen ist größer als die Berühungsbelastungen der beiden anderen diagonal einander gegenüberliegenden Reifen. In diesem Falle wird die eingestellte Referenzfahrzeughöhe zum Zwecke der Kompensation durch Hilfsgrößen-Aufschaltung geändert, dadurch werden die Aufhängungen der Räder mit den größeren Berührungsbelastungen um eine Höhendifferenz zusammengezogen, und die Aufhängungen der Räder mit den kleineren Berührungsbelastungen werden um die Höhendifferenz ausgedehnt, so daß das Ungleichgewicht der Berührungsbelastung vermindert wird. Die Berührungsbelastungen der einzelnen Aufhängungen werden durch Aufhängungsreaktionskraft-Detektoren [dort (16)] ermittelt, die als Druckfühler ausgebildet sind und die den internen Hydraulikdruck in jeder Aufhängung erfassen. Die Detektor-Signale stellen nach ihrer Vorbearbeitung durch ein Tiefpassfilter die Basis für die Bestimmung der einzelnen, auf die Reifen wirkenden, Aufhängungsreaktionskräfte dar, welche den weiteren Berechnungen zur Ungleichgewichts-Kompensation zugrundeliegen.

Die eingangs genannte Einrichtung weist jedoch den Nachteil auf, daß man, wenn man bei wechselnder Beladung immer eine optimale Einstellung erreichen will, Verstellungen vorzusehen hat, die den Bedienungskomfort erheblich einschränken.

Der Erfindung liegt deshalb die Aufgabe zugrunde, Maßnahmen für eine mit Druckmittel arbeitende Niveauregeleinrichtung der eingangs genannten Art vorzusehen, damit bei wechselnder Beladung keine umständlichen Verstellungen erforderlich sind.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung beruht nämlich auf der Erkenntnis, daß sich der Abstand zwischen Straße und dem Fahrzeugaufbau durch die Reifeneindrückung ändert, welcher von der Beladung abhängt. Der Abstand zwischen Straße und Fahrzeugaufbau stellt nämlich die Summe des, wie oben erläutert, konstanten weil geregelten Abstandes Fahrzeugachse-Fahrzeugaufbau und des Abstandes Straße-Fahrzeugachse dar. Der letztere Abstand ist nicht konstant, da der Reifen durch die Beladung eingedrückt wird, und er daher beladungsabhängig ist. Der beladungsabhängige Einfluß kann in der Größenordnung von einigen Zentimetern liegen.

In bezug auf Busse mit Heckmotor hat die Erfindung den Vorteil, daß die Bodenfreiheit zwischen Straße und Motor auch im beladenen Zustand stets ausreicht. Die Bodenfreiheit wird festgelegt, indem der Niveau-Sollwert bei leerem Fahrzeug eingestellt wird. Diese Bodenfreiheit bleibt auch bei Beladung erhalten.

Für ein Fahrzeug mit sehr hohem Aufbau hat die Erfindung den Vorteil, daß bei einer Beladungsänderung die zulässige Gesamthöhe des Fahrzeugs (von 4 m) mit Sicherheit nicht überschritten wird, wenn einmal am leeren Fahrzeug die Gesamthöhe eingestellt worden ist. Der Fahrer muß also nicht nach jeder Beladungsänderung die Gesamt-Fahrzeughöhe neu einstellen, was sehr umständlich wäre, da der Fahrer hierbei manuell die Fahrzeughöhe zu messen hätte. Zusätzlich wird bei einem beladenen Fahrzeug ein Durchschlagen des Fahrzeugaufbaus auf die Puffer (Gummipufferanschlag) verhindert, weil der Federweg automatisch beladungsabhängig vergrößert wird.

Eine manuelle beladungsabhängige Federwegverstellung bedeutet nämlich, mit Hilfe der Fernbedienung ein neues Soll-Niveau einzuspeichern, das um den Betrag der ladungsbedingten Reifeneindrückung höher liegt als das Soll-Niveau im Zustand ohne Beladung. Dieses Verfahren ist jedoch so umständlich, daß es in der Praxis meist unterbleibt.

Die Erfindung wird im folgenden anhand eines Ausführungsbeispiels, das in den Zeichnungen dargestellt ist, näher erläutert.

Dabei zeigen:

Fig. 1       die Komponenten der Niveauregeleinrichtung für eine Achse,

Fig. 2       die Funktionseinheiten des Regelkreises für einen Luftfederbalg,

Fig. 3       das Sollwert-Toleranzband für eine Achse,

Fig. 4a       die Reifeneindrückungs-Kompensation, bei der der Reifeneindrückungs-Wert als diskontinuierliche Funktion vorgegeben wird,

Fig. 4b       die Reifeneindrückungs-Kompensation, bei der der Reifeneindrückungs-Wert als kontinuierliche Funktion mit Begrenzung der maximalen Kompensation vorgegeben wird,

Fig. 4c       die Reifeneindrückungs-Kompensation mit kontinuierlicher Reifeneindrükkungs-Wert-Vorgabe in gegenüber Fig. 4a etwas vereinfachter Ausführung,

Fig. 5       die Funktion, nach der der Eingriff der Hilfsgröße für kleine Soll-Abstands-Vorgaben reduziert wird,

Fig. 6a bis 6c       zu Fig. 1 unterschiedliche Varianten der Beladungs-Ermittlung.

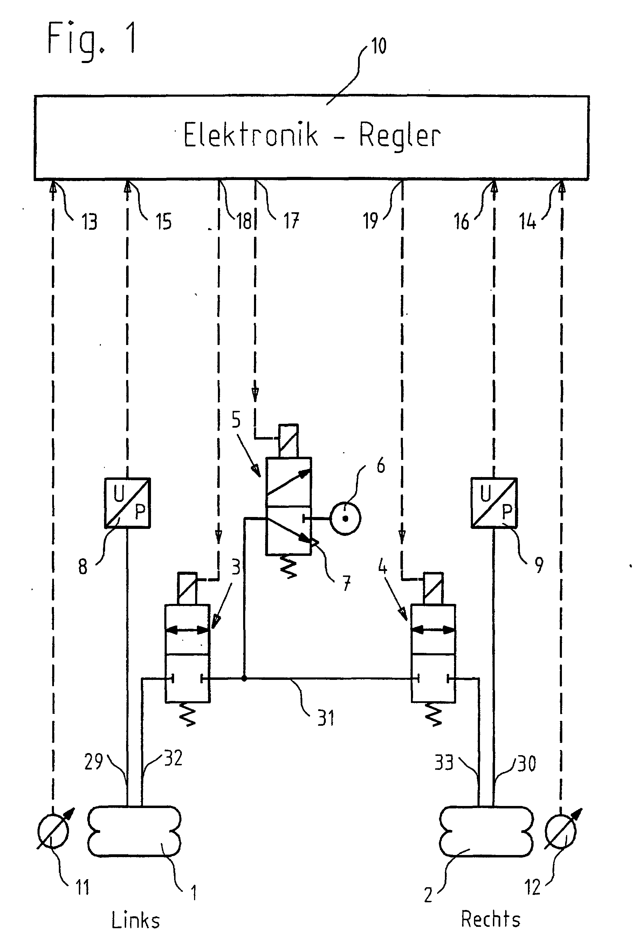

In Fig. 1 gibt es zwischen den Komponenten pneumatische und elektrische Verbindungen: Pneumatische Verbindungen werden als durchgehende Linie dargestellt, während elektrische Verbindungen als gestrichelte Linie gezeichnet sind.

Der Fahrzeugaufbau (gefederter Teil des Fahrzeugs) ist gegenüber den Fahrzeugachsen (ungefederter Teil des Fahrzeugs) durch Luftfederbälge abgestützt. Bezüglich einer Achse sind dies ein Luftfederbalg (1) an der linken und ein Luftfederbalg (2) an der rechten Seite der Achse. Da die Luftmenge in den Luftfederbälgen die Höhe des Fahrzeugaufbaus über der Fahrzeugachse bestimmt, kann diese Höhe durch Veränderung der Luftmenge in den Luftfederbälgen verändert werden. Druck, Volumen und Temperatur eines Gases stehen aufgrund der Gasgesetze zueinander in Zusammenhang, und so führt bei gleichem Volumen eines Luftfederbalges (konstantes Niveau) eine Veränderung der Luftmenge in diesem Luftfederbalg ebenfalls zu einer Veränderung des Drucks im Luftfederbalg. Jedem Luftfederbalg ist daher ein Belüftungs-/Entlüftungs-Ventil zugeordnet. Konstruktiv ist ein Belüftungs-/Entlüftungs-Ventil als 2/2-Wege-Magnetventil ausgeführt mit einer Abschlußstellung, in der die Luftmenge des Luftfederbalges nicht verändert wird und einer Durchlaßstellung, in der eine Veränderung der Luftmenge des Luftfederbalges erfolgt. Dem Luftfederbalg (1) ist das Belüftungs-/Entlüftungs-Ventil (3) und dem Luftfederbalg (2) das Belüftungs-/Entlüftungs-Ventil (4) zugeordnet.

Zur kontinuierlichen Erfassung der Höhen, nämlich der Abstände des Fahrzeugaufbaus gegenüber der Fahrzeugachse, sind Höhensensoren vorgesehen. Diese Höhensensoren ermitteln die genannten Abstände an den Positionen der Luftfederbälge und geben diese Werte in Form elektrischer Signale an einen Elektronik-Regler (10) weiter. Zur Höhenbestimmung des Fahrzeugaufbaus sind bezüglich einer Achse zwei Höhensensoren vorgesehen, und zwar ein Höhensensor (11) für den Luftfederbalg (1) und ein Höhensensor (12) für den Luftfederbalg (2).

Zur kostengünstigen Realisierung der Niveauregeleinrichtung werden die Höhenregelungen an den einzelnen Achs-Positionen im Zeitmultiplexverfahren, d. h. zeitlich hintereinander, abgewickelt. Dadurch können Komponenten für alle Regelpositionen gemeinsam vorgesehen werden. So ist für die Regelpositionen "links" und "rechts" ein als 3/2-Wege-Magnetventil ausgebildetes gemeinsames Richtungsventil (5) vorgesehen, welches festlegt, ob der Luftfederbalg der Regelposition, welche gerade bearbeitet wird, über einen Luftvorrat (6) belüftet oder ob dieser Luftfederbalg über eine Entlüftung (7) zur Atmosphäre entlüftet werden soll. Je nachdem, ob be- oder entlüftet wird, nimmt das Ventil (5) die Belüftungs- oder Entlüftungsstellung ein. Bei nicht erregtem Magneten wird die Entlüftungsstellung eingenommen.

Zur Regelung der Luftmenge in den Luftfederbälgen (1), (2) ist der Elektronik-Regler (10) vorgesehen, der über vier Eingänge (13, 14, 15, 16) und drei Ausgänge (17, 18, 19) verfügt. Der erste Eingang (13) ist mit dem Höhensensor (11) und der zweite Eingang (14) ist mit dem Höhensensor (12) verbunden; der erste Ausgang (17) steuert das gemeinsame Richtungsventil (5), der zweite Ausgang (18) steuert das Belüftungs-/Entlüftungs-Ventil (3) und der dritte Ausgang (19) steuert das Belüftungs-/Entlüftungs-Ventil (4) an.

Der Ausgang des gemeinsamen Richtungsventils (5) ist mit einer Leitung (31) verbunden, welche zu den Belüftungs/Entlüftungs-Ventilen (3, 4) führt, die die Funktion von Stellventilen für die Luftfederbälge (1, 2) erfüllen; hierbei sind das Stellventil (3) über eine Leitung (32) mit dem Luftfederbalg (1) und das Stellventil (4) über eine Leitung (33) mit dem Luftfederbalg (2) verbunden. Bei den Stellventilen (3, 4) liegt bei nicht erregtem Magneten die Abschlußstellung vor; in dieser Schaltstellung bleibt die Luftmenge in dem Luftfederbalg, der mit dem jeweiligen Stellventil verbunden ist, unverändert. Bei erregtem Magneten eines Stellventils schaltet dieses in Durchlaßstellung um; in dieser Stellung wird die Luftmenge in dem Luftfederbalg, welcher mit dem Stellventil verbunden ist, verändert, wobei , wie vorstehend beschrieben, die Art der Veränderung (Be- bzw. Entlüften) von der gewählten Stellung des gemeinsamen Richtungsventils (5) abhängt.

Zur Niveauregelung einer Achse werden unter Verwendung der zwei Höhensensoren (11, 12) zwei unterschiedliche Regelkreise mit jeweils einer eigenen Kombination von Höhensensor, Luftfederbalg und Stellventil gebildet. Bezüglich des Luftfederbalges an der Achse "links" ist dies die Kombination der Elemente mit den Bezugszeichen (11), (1) und (3), bezüglich des Luftfederbalges an der Achse "rechts" ist es diejenige mit den Bezugszeichen (12), (2) und (4).

Neben dem beschriebenen Höhensensor ist für jeden Luftfederbalg ein Drucksensor vorgesehen. Für den Luftfederbalg (1) ist dies ein Drucksensor (8), für den Luftfederbalg (2) ist es ein Drucksensor (9). Der Drucksensor (8) ist über eine Leitung (29) mit dem Luftfederbalg (1) pneumatisch verbunden, der Drucksensor (9) ist mit dem Luftfederbalg (2) über eine Leitung (30) verbunden.

Ein elektrischer Ausgang des Drucksensors (8) ist mit dem dritten Eingang (15), und ein elektrischer Ausgang des Drucksensors (9) ist mit dem vierten Eingang (16) des Elektronik-Reglers (10) verbunden.

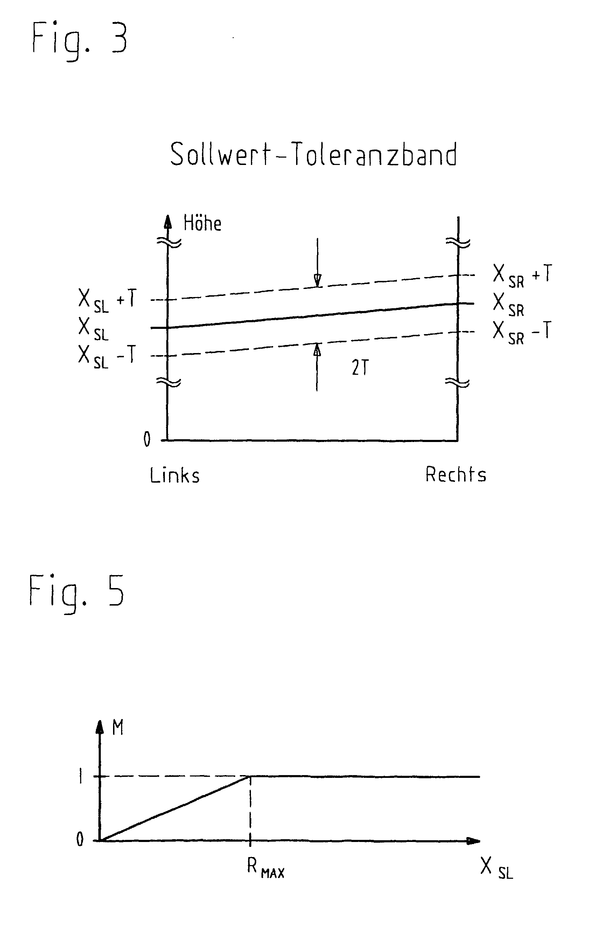

Im folgenden wird zunächst das Prinzip der Regelung für die erwähnten zwei Regelkreise beschrieben. Die Niveauregelung der Luftfederbälge (1, 2) nach Fig. 1 erfolgt dabei entsprechend dem in Fig. 3 angegebenen Sollwert-Toleranzband.

Im Elekronik-Regler (10) nach Fig. 1 ist in geeigneter, nicht dargestellter Weise für den linken Luftfederbalg (1) ein Sollwert $X_{SL}$ und für den rechten Luftfederbalg (2) ein Sollwert $X_{SR}$ eingespeichert. Es besteht z. B., wie eingangs erwähnt, die Möglichkeit, diese Sollwerte über eine handbetätigte Fernsteuerung vorzugeben. Die linken und rechten Sollwerte $X_{SL}$ und $X_{SR}$ können, wie auch in Fig. 3 dargestellt, auf unterschiedliche Höhen eingestellt sein.

Um diese Höhen-Sollwerte $X_{SL}$ und $X_{SR}$ wird entsprechend Fig. 3 ein Toleranzband gebildet, das sich von dem jeweiligen Sollwert um einen Wert T zu höheren und um den Wert T zu niederen Werten erstreckt; das Toleranzband hat damit eine Breite von 2T.

Wie erläutert, steht am ersten Eingang (13) des Elektronik-Reglers (10) der Meßwert des dem Luftfederbalg (1) zugeordneten Höhensensors (11) an. Dieser Meßwert stellt den Höhen-Istwert $X_{IL}$ für den linken Luftfederbalg dar.

In sinngemäß gleicher Weise steht am zweiten Eingang (14) des Elektronik-Reglers (10) der Höhen-Istwert $X_{IR}$ für den rechten Luftfederbalg (2) an.

Bei einem Beladungswechsel ändert sich das Gewicht des Fahrzeugaufbaus und damit ändern sich auch - aufgrund ihrer Federcharakteristik - die Höhen der Luftfederbälge einer Achse: Es verändern sich die Höhen-Istwerte $X_{IL}$ und $X_{IR}$.

Wird die Beladung z. B. vergrößert, so stellen sich kleinere Werte $X_{IL}$ und $X_{IR}$ ein. Überschreitet diese Beladungs-Vergrößerung eine gewisse Grenze, so fallen die sich neu einstellenden Höhen-Istwerte außerhalb des Sollwert-Toleranzbandes. Bei symmetrischer Beladung wird dann im allgemeinen das Toleranzband sowohl "links" als auch "rechts" unterschritten; in diesem Fall stellt sich ein neuer Höhen-Istwert "links" $X_{IL}$ ein, der kleiner ist als der das Sollwert-Toleranzband begrenzende untere Wert $(X_{SL}-T)$ auf der linken Seite, und als Höhen-Istwert "rechts" stellt sich ein Istwert $X_{IR}$ ein, der kleiner ist als der das Sollwert-Toleranzband begrenzende untere Wert ($X_{SR}$-T) auf der rechten Seite der Achse.

Als Folge dieser Unterschreitung des Sollwert-Toleranzbandes durch die Istwerte wird die Niveauregelung aktiviert. Die Luftmenge in den Luftfederbälgen (1, 2) nach Fig. 1 wird solange erhöht, bis sich an den Höhen-Sensoren (11, 12) Höhen-Istwerte $X_{IL}$ und $X_{IR}$ einstellen, die innerhalb des in Fig. 3 erläuterten Sollwert-Toleranzbandes liegen. Über die zwei erwähnten Regelkreise mit ihrer Kombination der Elemente (11, 1, 3) und (12, 2, 4) werden die beiden Luftfederbälge (1, 2) nach Fig. 1 belüftet, wobei das gemeinsame Richtungsventil (5) in die Belüftungsstellung geschaltet ist.

Ist die erwähnte Beladung nicht symmetrisch sondern einseitig, so wird im allgemeinen das Sollwert-Toleranzband nur auf einer Seite "links" oder "rechts", nämlich derjenigen Seite unterschritten, auf welche die einseitige Beladung einwirkt. In diesem Fall wird im Verlauf der Niveauregelung nur der Luftbalg auf der Seite der Sollwert-Toleranzunterschreitung belüftet; durch die Belüftung wird die Luftmenge in dem betroffenen Luftfederbalg solange erhöht, bis sich an diesem Luftfederbalg ein Höhen-Istwert einstellt, der in das Sollwert-Toleranzband fällt.

Wird die Beladung eines Fahrzeugs reduziert, so dehnen sich die Luftfederbälge einer Achse aus und die Höhen-Istwerte $X_{IL}$ und $X_{IR}$ der Höhensensoren (11, 12) nach Fig. 1 werden vergrößert. Bei dieser Beladungs-Reduzierung wird möglicherweise das Sollwert-Toleranzband nach Fig. 3 an der linken Seite überschritten (wenn $X_{IL} >$ ($X_{SL}$+T)), an der rechten Seite überschritten (wenn $X_{IR} > (X_{SR}$+T)), oder sie werden sowohl an der linken und der rechten Seite überschritten. Die von der Sollwert-Toleranzband-Überschreitung betroffenen Luftfederbälge (1, 2, oder 1 und 2) werden entlüftet, bis die ihnen zugeordneten Höhen-Istwerte ($X_{IL}$, $X_{IR}$, oder $X_{IL}$ und $X_{IR}$) wieder in das Sollwert-Toleranzband nach Fig. 3 fallen. Diese Entlüftung erfolgt in sinngemäß gleicher Weise wie die oben beschriebene Belüftung, wobei das gemeinsame Richtungsventil (5) nach Fig. 1 in die Entlüftungsstellung geschaltet ist.

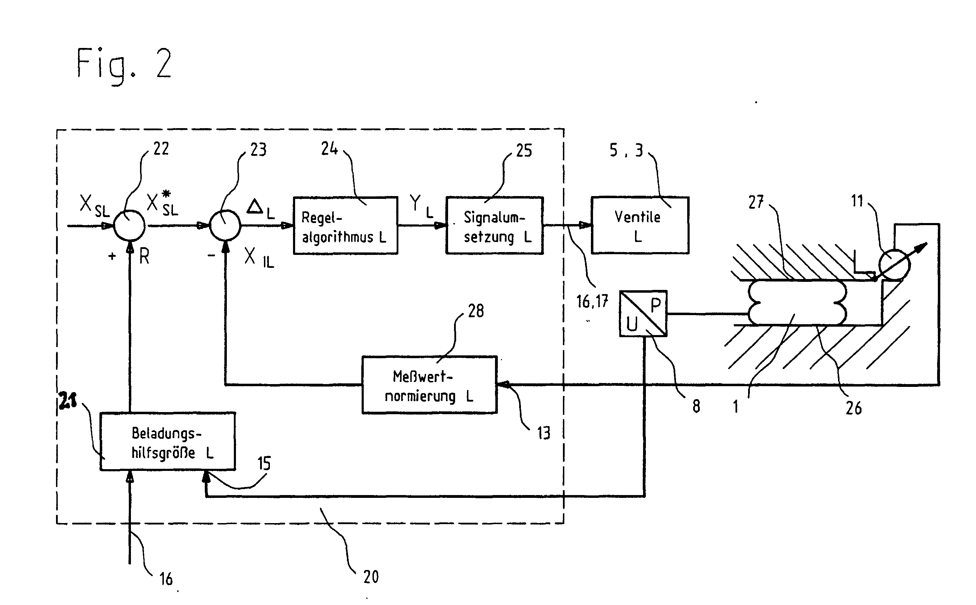

In Fig. 2 sind die Funktionseinheiten des Regelkreises für einen der beiden Luftfederbälge am Beispiel des Luftfederbalges (1) nach Fig. 1 dargestellt. Es wird die Struktur des Regelkreises und das Zusammenwirken seiner mechanischen, elektromechanischen und elektronischen Funktionseinheiten gezeigt. Der Index "L" deutet an, daß sie zum Regelkreis "links" des Luftfederbalges (1) gehören.

Die Anordnung (1, 26, 27) zeigt schematisch, wie der Luftfederbalg (1) sich abstützend auf einer gedachten Oberkante (26) der Fahrzeugachse "links" den sich mit seiner Unterkante (27) am Luftfederbalg (1) abstützenden Fahrzeugaufbau auf der linken Seite in Abhängigkeit von der im Luftfederbalg (1) gespeicherten Luftmenge nach oben bewegt. Die Einspeisung erfolgt über die Ventile L (5, 3). Die sich aufgrund der Luftmenge im Luftfederbalg (1) einstellende Höhe zwischen Fahrzeugachse und Fahrzeugaufbau wird im Höhensensor (11) gemessen, und dieser Meßwert wird über einen Eingang (13) (den ersten Eingang (13) des Elektronik-Reglers (10) nach Fig. 1) in einen Elektronik-Regler "linke Seite" (20) eingespeist, welcher denjenigen Teil des Elektronik-Reglers (10) ausmacht, der für den linken Luftfederbalg (1) zuständig ist, wobei der Meßwert der Höhe dort von einer Meßwertnormierung "links" (28) derart weiterverarbeitet wird, daß er als normierte Digitalzahl $X_{IL}$ zur Verfügung steht.

Die innere Schleife des Elektronik-Reglers (20) besteht aus einem Regelkomparator "links" (23), der durch Subtraktion des Höhen-Istwertes "links" $X_{IL}$ von dem modifizierten Höhen-Sollwert "links" $X_{SL}{}^*$ eine Regelabweichung "links" $\Delta_L$ bildet, und zum anderen aus einem funktionellen Block "Regelalgorithmus L" (24), dem die Regelabweichung $\Delta_L$ zugeführt wird.

Der funktionelle Block "Regelalgorithmus L" (23) ermittelt aus der Regelabweichung $\Delta_L$ eine Stellgröße $Y_L$ für den Luftfederbalg (1) an der linken Seite.

Die Einheiten Regelkomparator (23) und Regelalgorithmus L (24) stellen Programmteile dar, die mit normierten digitalen Werten arbeiten. Der Ausgang des Regelalgorithmus L (24), nämlich die Stellgröße $Y_L$, stellt deshalb ebenfalls ein digitales Wort dar, dessen Inhalt in der Signalumsetzung L (25) in logische Steuersignale umgesetzt wird, welche die dem Luftfederbalg (1) zugeordneten Ventile L (5, 3) ansteuern.

Neben der inneren Schleife weist die Struktur des Elektronik-Reglers (20) zusätzlich eine äußere, der inneren Schleife überlagerte Schleife auf, die zur Bildung eines modifizierten Sollwertes $X_{SL}{}^*$ dient. Hierzu ist ein Hilfsgrößen-Additionsglied (22) vorgesehen, welchem an seinem ersten Eingang der Höhen-Sollwert $X_{SL}$ für den Luftfederbalg (1) und an seinem zweiten Eingang eine Hilfsgröße R vorgegeben wird, die einen weiter unten erläuterten Wert für die Reifeneindrückung darstellt. Der modifizierte Sollwert $X_{SL}{}^*$ stellt die Summe von beiden Werten dar:

$$X_{SL}{}^* = X_{SL} + R$$

Die Hilfsgröße R wird dem Hilfsgrößen-Additionsglied (22) von einer Beladungshilfsgröße L (21) zugeführt. Die Einheit "Beladungshilfsgröße L" (21) verfügt über zwei Eingänge (15), (16). Der Eingang (15) stellt den dritten Eingang des Elektronik-Reglers (10) nach Fig. 1 dar, nämlich denjenigen Eingang, dem der Drucksensor-Meßwert des Luftfederbalges (1) zugeführt wird. Der Eingang (16) stellt den vierten Eingang des Elektronik-Reglers nach Fig. 1 dar, dem der Drucksensor-Wert des anderen Luftfederbalges (2) zugeführt wird.

An den beiden Eingängen der Beladungshilfsgröße L (21) liegen also die Drucksensor-Meßwerte der Luftfederbälge (1, 2) der betrachteten Fahrzeugachse an. Als Maß für die Beladung der Fahrzeugachse wird beispielsweise der Mittelwert $P_M$ aus dem in dem Luftfederbalg (1) "links" herrschenden Druck $P_L$ und dem in dem Luftfederbalg (2) "rechts" herrschenden Druck $P_R$ gebildet:

$$P_M = \frac{P_L + P_R}{2}$$

Unter Zugrundelegung des Druck-Mittelwertes $P_M$ als ein Maß für die Beladung des Fahrzeugs legt die Beladungshilfsgröße L (21) die Hilfsgröße R fest. Die Hilfsgröße R stellt die Reifeneindrückung dar, d. h. sie ist der Wert des Weges, um den durch die Beladung der Reifen eingedrückt wird. Bei einer Realisierung mit Hilfe eines durch ein Rechnerprogramm gesteuerten Elektronik-Reglers stellt der Wert R ebenso wie die vorstehend bereits erläuterten Kenngrößen eine normierte Digitalzahl dar. Die Festlegung der Beziehung zwischen der Hilfsgröße R und dem Druck-Mittelwert $P_M$ wird weiter unten erläutert.

Die Wirkung der Aufschaltung der Hilfsgröße R am Hilfsgrößen-Additionsglied (22) besteht darin, daß die innere Schleife des Reglers den Sollwert $X_{SL}*$ ausregelt, d. h. daß sie einen Istwert einstellt, der um den Wert der Reifeneindrückung R höher liegt als der am Eingang des Reglers eingespeiste Sollwert $X_{SL}$.

Mit der Beschreibung des Elektronik-Reglers (20) für den Luftfederbalg "links" (1) ist auch der Elektronik-Regler für den anderen Luftfederbalg "rechts" (2) nach Fig. 1 beschrieben, da beide Regler identisch aufgebaut sind. Die Funktionseinheiten für den Elektronik-Regler des Luftfederbalgs (2) ergeben sich, wenn man die in Fig. 2 beschriebenen Komponenten für den Luftfederbalg (1) durch die Komponenten für den Luftfederbalg (2) ersetzt, die vorstehend beschrieben wurden.

In diesem Zusammenhang sei darauf hingewiesen, daß bei dieser Ersetzung formal neben der "Beladungshilfsgröße L" (21) für Luftfederbalg (1) nach Fig. 2 auch eine "Beladungshilfsgröße R" für Luftfederbalg (2) nach Fig. 1 entstehen würde; somit würde der Elektronik-Regler (10) nach Fig. 2 über zwei unterschiedliche Einrichtungen zur Beladungsermittlung und zur Bestimmung der Hilfsgröße R verfügen (Beladungshilfsgröße "L" und Beladungshilfsgröße "R"). Es ist natürlich möglich, auf diese Weise zwei unterschiedliche Einrichtungen vorzusehen, nämlich wenn man die Reifeneindrückungs-Kompensation für die linke Seite der Fahrzeugachse unterschiedlich zu derjenigen der rechten Seite der Fahrzeugachse ausgestalten will. Im allgemeinen wird man jedoch mit einer Einheit "Beladungshilfsgröße" auskommen, die man dann gemeinsam für beide Luftfederbälge (1, 2) nach Fig. 1 verwenden kann. Bei einer Realisierung mit Hilfe eines Software-Regelprogramms kann diese Beladungshilfsgröße aus einem Programmteil bestehen, der für beide Regelkreise gemeinsam verwendet wird.

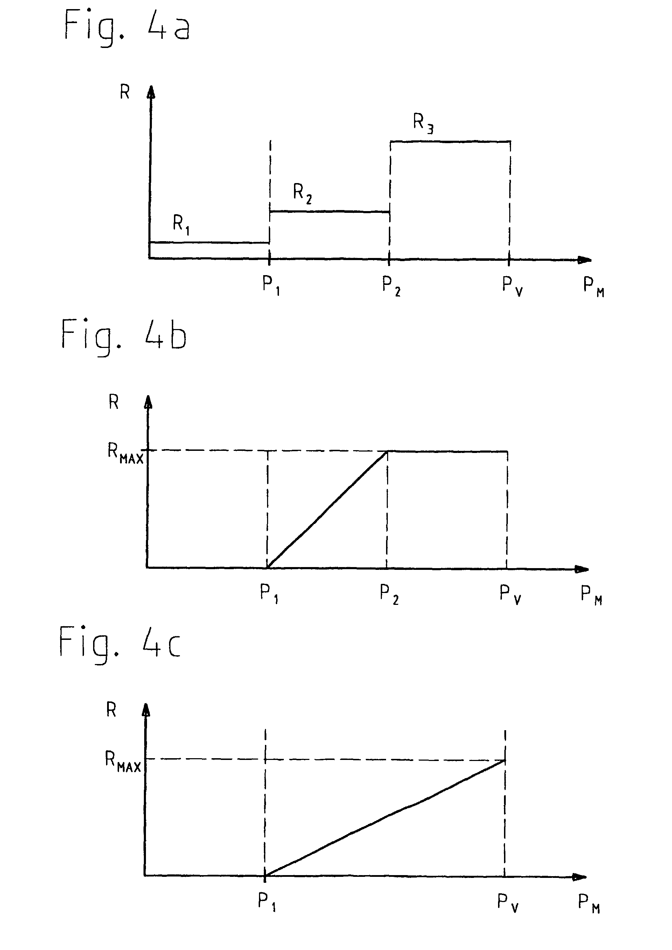

Die Funktion des Reifeneindrückungs-Wertes R in Abhängigkeit vom Druck-Mittelwert $P_M$ kann entsprechend den jeweiligen Anforderungen gewählt werden. Die Funktion kann als diskontinuierliche Funktion, d. h. in einer Reihe von verschiedenen Festwerten, die verschiedenen Druckbereichen zugeordnet sind, oder als kontinuierliche Funktion, d. h. stetige Funktion, vorgegeben werden. In Fig. 4a bis 4c sind verschiedene Varianten der Einheit "Beladungshilfsgröße L" mit einer diskontinuierlichen und einer kontinuierlichen Hilfsgrößen-Zuweisung dargestellt.

Fig. 4a zeigt ein Ausführungsbeispiel, bei dem der Reifeneindrückungs-Wert R in Abhängigkeit von dem Druck-Mittelwert $P_M$ als diskontinuierliche Funktion vorgegeben ist. Der Druckbereich zwischen 0 und dem Luftvorratsdruck $P_V$ wird in eine Anzahl von Druckbereichen unterteilt. Wenn man zwischen mehreren Belastungsfällen unterscheiden will, so ist es sinnvoll, mindestens zwei Druckbereiche vorzusehen. Je mehr Druckbereiche vorgesehen sind, desto größer ist die Genauigkeit, jedoch erhöht sich mit der Anzahl der Druckbereiche auch der Aufwand, wodurch ein Kompromiß zwischen Aufwand und Genauigkeit zu treffen ist.

In Fig. 4a sind drei Druckbereiche vorgesehen; ein unterer Druckbereich reicht für einen Druck von 0 bis zu einem Grenzdruck von $P_1$, ein mittlerer Druckbereich reicht von dem Grenzdruck $P_1$ bis zu einem Grenzdruck $P_2$, und ein oberer Druckbereich reicht von dem Grenzdruck $P_2$ bis zu dem Luftvorratsdruck $P_V$. Die Parameter, nämlich die Grenzdrücke $P_1$ und $P_2$, werden je nach Anforderung festgelegt wobei generell gilt:

$$0 < P_1 < P_1 < P_V$$

Es sind drei diskrete Reifeneindrückungs-Werte $R_1$, $R_2$, $R_3$ vorgesehen, wobei jedem Druckbereich einer dieser Werte, sinnvoller Weise in aufsteigender Größe, zugewiesen wird:

$R = R_1$      für      $0 < P_M \leq P_1$      (unterer Bereich)
$R = R_2$      für      $P_1 < P_M \leq P_2$      (mittlerer Bereich)
$R = R_3$      für      $P_2 < P_M \leq P_V$ (oberer Bereich)

Ein Ausführungsbeispiel, bei dem der Reifeneindrückungs-Wert R als kontinuierliche Funktion vorgegeben wird, ist in Fig. 4b dargestellt. Wie in Fig. 4a sind ebenfalls drei Druckbereiche, ein unterer, mittlerer und oberer Druckbereich vorgegeben, die durch zwei Parameter, die Grenzdrücke $P_1$ und $P_2$ und den Luftvorratsdruck $P_V$ bestimmt sind.

Für den unteren Druckbereich, d. h. für kleine Druckwerte, wird der Reifeneindrückungs-Wert gleich 0 gesetzt, da für kleine Beladungen die Reifeneindrückung noch praktisch unerheblich ist, und im oberen Bereich wird der Reifeneindrückungs-Wert gleich einem Maximalwert $R_{MAX}$ gesetzt. Im mittleren Bereich wird der Reifeneindrückungs-Wert R durch eine gerade Strecke entsprechend einer linearen Interpolation gebildet. In diesem Bereich ändert sich die Reifeneindrückung linear mit dem Druck-Mittelwert $P_M$. Die gerade Strecke beginnt bei einem Reifeneindrückungs-Wert 0 an der Stelle $P_M = P_1$ und erstreckt sich zu einem Reifeneindrückungs-Wert $R = R_{MAX}$ an der Stelle $P_M = P_2$.

Bei der Funktion nach Fig. 4b gibt es also einen unteren Bereich, bei dem die Kompensation 0 ist, einen mittleren Bereich, bei dem die Kompensation von 0 zu einem Maximalwert ansteigt und einen oberen Bereich, bei dem die Kompensation gleich dem Maximalwert gesetzt wird.

Auch hier läßt sich die Genauigkeit der gewünschten Reifeneindrückungs-Kompensation erhöhen, wenn man die Anzahl der Bereiche vergrößert und z. B. in verschiedenen Bereichen gerade Strecken mit unterschiedlicher Steigung wählt; allerdings erhöht sich auch dadurch der Aufwand.

Fig. 4c zeigt ein Ausführungsbeispiel mit gegenüber Fig. 4b reduziertem Aufwand. Es ist als Parameter nur ein Grenzdruck $P_1$ vorgesehen, der einen unteren und einen oberen Bereich bestimmt. Im unteren Bereich wird der Reifeneindrückungs-Wert R gleich 0 gesetzt und im oberen Bereich wird er durch eine gerade Strecke gebildet, die sich von 0 bis zu dem Maximalwert $R_{MAX}$ erstreckt. Bei dieser Art der Kompensation wird der Maximalwert des Reifeneindrückungs-Wertes R erst erreicht, wenn der Druck-Mittelwert $P_M$ gleich dem Luftvorratsdruck $P_V$ ist.

Bei der beschriebenen Reifeneindrückungs-Kompensation tritt ein Effekt auf, daß sehr tiefe Niveaus nicht mehr angesteuert werden können, wenn die Reifeneindrückungs-Kompensation wirksam ist. Um diesen Effekt zu erläutern, wird auf Fig. 2 verwiesen.

Bei wirksamer Kompensation wird am Hilfsgrößen-Additionsglied (22) zu dem Soll-Wert $X_{SL}$ eine positive Größe R addiert, wobei diese Summe den modifizierten Soll-Wert $X_{SL}^*$ ergibt, welcher das Regelniveau darstellt. Der Wert R wirkt also als positiver Offset und begrenzt das ansteuerbare Tiefniveau. Aus diesem Grunde ist es, wie oben angedeutet, bei einer entsprechenden Ausführungsform der Erfindung sinnvoll, die wirksame Reifeneindrückungs-Kompensation auf einen Maximalwert zu begrenzen; dies ist dann bei den Ausführungsbeispielen nach Fig. 4a der Wert $R_3$, bei den Ausführungsbeispielen nach Fig. 4b und 4c der Wert $R_{MAX}$.

Stellt die Begrenzung der maximalen Reifeneindrückungs-Kompensation schon eine Verbesserung in der Ansteuerung von Tiefniveaus dar, so kann es unerwünscht sein, daß man bei Beladung und einer Sollwertvorgabe von 0 ein Ist-Niveau von 0 nicht erreichen kann. Entsprechend einer Weiterbildung der Erfindung läßt sich deshalb auch bei wirksamer Reifeneindrückungs-Kompensation ein Wert von 0 einstellen. Bei dieser Weiterbildung wird der Eingriff der Hilfsgröße R bei niederen Sollwerten begrenzt. Die Hilfsgröße R ist, wie oben dargelegt, eine Funktion des Druck-Mittelwertes:

$$R = R(P_M)$$

Anstatt dieser Kompensation $R(P_M)$ kann eine gewichtete Kompensation mit Hilfe einer Funktion G eingesetzt werden, welche das Produkt aus der vorstehend erläuterten Funktion der Hilfsgröße R und einer Gewichtungsfunktion M darstellt, die wiederum vom Sollwert abhängt:

$$G = R(P_M) \cdot M(X_{SL})$$

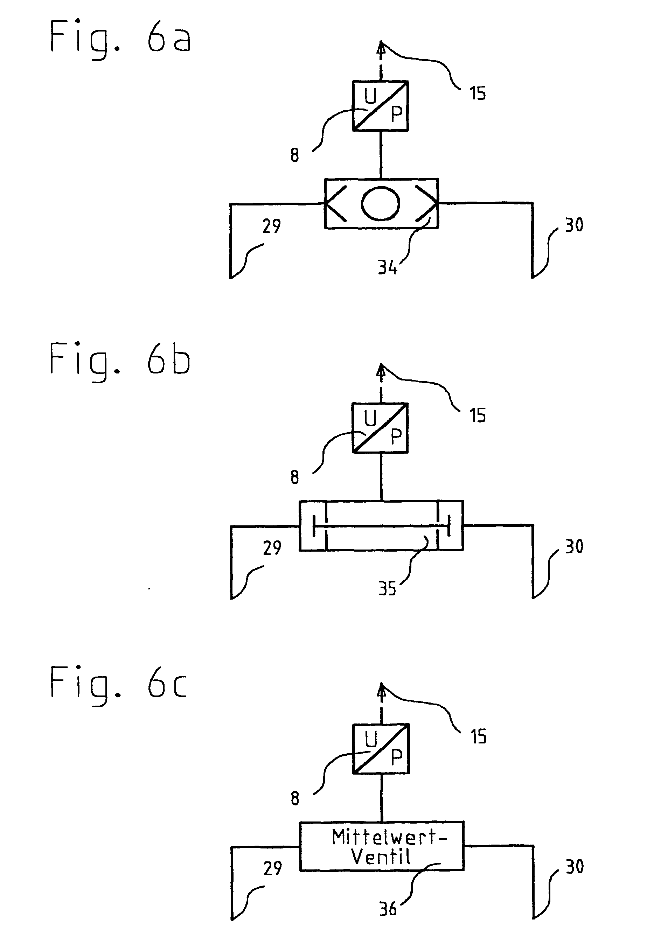

Die Gewichtungsfunktion $M(X_{SL})$ ist in Fig. 5 dargestellt. Für große Sollwerte, d. h. für alle Sollwerte $X_{SL}$, die größer als der maximale Reifeneindrückungs-Wert $R_{MAX}$ sind, ist die Gewichtungsfunktion M = 1: Für diese Sollwerte bleibt der Eingriff der Reifeneindrückungs-Kompensation unverändert.

Für kleine Sollwerte im Bereich zwischen dem Sollwert 0 und dem Sollwert $R_{MAX}$ wird die Funktion $M(X_{SL})$ entsprechend einer linearen Interpolation vom Ausgangswert 0 bis zum Endwert 1 erhöht.

Durch die Produktbildung bei der Funktion G wird der Eingriff der Reifeneindrückungs-Kompensation von großen Sollwerten kommend und beginnend mit dem Sollwert $X_{SL} = R_{MAX}$ in Richtung zu kleineren Sollwerten hin stetig verringert, so daß er bei dem Sollwert $X_{SL} = 0$ schließlich zu 0 geworden ist. Aufgrund der angegebenen mathematischen Funktion ist die Reduzierung des Eingriffs durch den Quotienten zwischen dem Soll-Abstand $X_{SL}$ und dem Maximalwert $R_{max}$ des Reifeneindrückungs-Wertes gegeben.

Es bestehen verschiedene Möglichkeiten, die Sensorik zur Ermittlung der Beladung entsprechend Fig. 1 alternativ auszugestalten. Wenn es bei einem Anwendungsfall ausreichend ist, die Beladung anhand des Druckes von nur einem der beiden Luftfederbälge (1, 2) zu ermitteln, so genügt es, zur Ermittlung der Beladung nur einen der beiden Drucksensoren (8, 9) vorzusehen. Bei einer solchen Ausführung kann man auch auf die Mittelwertbildung als Teil der Beladungshilfsgröße (21) nach Fig. 2 verzichten; der Meßwert des einen nur noch verwendeten Drucksensors wird direkt als Beladungs-Maß für den Reifeneindrückungs-Wert benutzt.

In Fig. 6a bis Fig. 6c sind weitere im Vergleich zu Fig. 1 alternative Ausführungsformen der Sensorik zur Ermittlung der Beladung dargestellt.

In Fig. 6a führt die Leitung (29) entsprechend Fig. 1 zu dem ersten von zwei Eingängen eines Wechselventiles (34); die Leitung (30) führt zu dem zweiten Eingang desselben Wechselventils (34). Der Ausgang des Wechselventils (34) ist mit dem pneumatischen Eingang des Drucksensors (8) verbunden, der elektrische Ausgang des Drucksensors (8) führt wie in Fig. 1 zum dritten Eingang (15) des Elektronik-Reglers (10). Bei dieser Ausführungsform wird ebenfalls nur ein Drucksensor benötigt. Aufgrund der Schaltcharakteristik des Wechselventils (34) wird als Beladungs-Maß der höhere Druck von den Drücken in den beiden Luftfederbälgen (1, 2) ausgewählt ("Select High").

In der Ausführungsform nach Fig. 6b ist das Wechselventil (34) aus Fig. 6a durch ein Doppel-Absperrventil (35) ersetzt. Bei dieser Ausführungsform ist ebenfalls nur ein Drucksensor (8) erforderlich; hier wird aufgrund der Schaltcharakteristik des Doppel-Absperrventils der geringere Druck von den Drücken in den beiden Luftfederbälgen (1, 2) zur Bestimmung der Beladung herangezogen ("Select Low").

Fig. 6c zeigt eine Ausführungsform mit ebenfalls nur einem Drucksensor. Hier sind die beiden Leitungen (29, 30) entsprechend Fig. 1 mit jeweils einem von zwei Eingängen eines pneumatischen Mittelwert-Ventils verbunden. Dieses Ventil bildet den Mittelwert aus den Drücken an seinen beiden Eingängen und gibt den Druckmittelwert an seinem Ausgang weiter; dieser Druck wird im Drucksensor (8) sensiert und in der oben beschriebenen Weise weiterverarbeitet.

Bezugszeichenliste

| ( 1) | Luftfederbalg an Achse links | Fig. 1 |
|---|---|---|
| ( 2) | Luftfederbalg an Achse rechts | Fig. 1 |
| ( 3) | Stellventil Luftfederbalg (1), Belüftungs/Entlüftungsventil | Fig. 1 |
| ( 4) | Stellventil Luftfederbalg (2), Belüftungs/Entlüftungsventil | Fig. 1 |
| ( 5) | Gemeinsames Richtungsventil | Fig. 1 |
| ( 6) | Luftvorrat | Fig. 1 |
| ( 7) | Entlüftung Richtungsventil (5) | Fig. 1 |
| ( 8) | Drucksensor Luftfederbalg (1) | Fig. 1 |
| ( 9) | Drucksensor Luftfederbalg (2) | Fig. 1 |
| (10) | Elektronik-Regler | Fig. 1 |
| (11) | Höhensensor Luftfederbalg (1) | Fig. 1 |
| (12) | Höhensensor Luftfederbalg (2) | Fig. 1 |
| (13) | Erster Eingang Elektronik-Regler (10) | Fig. 1 |
| (14) | Zweiter Eingang Elektronik-Regler (10) | Fig. 1 |
| (15) | Dritter Eingang Elektronik-Regler (10) | Fig. 1 |
| (16) | Vierter Eingang Elektronik-Regler (10) | Fig. 1 |
| (17) | Erster Ausgang Elektronik-Regler (10) | Fig. 1 |
| (18) | Zweiter Ausgang Elektronik-Regler (10) | Fig. 1 |
| (19) | Dritter Ausgang Elektronik-Regler (10) | Fig. 1 |
| (20) | Elektronik-Regler linke Seite | Fig. 2 |
| (21) | Beladungshilfsgröße | Fig. 2 |
| (22) | Hilfsgrößen-Additionsglied "links" | Fig. 2 |
| (23) | Regelkompensator "links" | Fig. 2 |
| (24) | Regelalgorithmus "links" | Fig. 2 |
| (25) | Signalumsetzung "links" | Fig. 2 |
| (26) | Oberkante Fahrzeugachse "links" | Fig. 2 |
| (27) | Unterkante Fahrzeugaufbau "links" | Fig. 2 |
| (28) | Meßwertnormierung "links" | Fig. 2 |

EP 0 779 167 B1

(fortgesetzt)

| (29) | Leitung Luftfederbalg (1) - Drucksensor (8) | Fig. 1 |
|---|---|---|
| (30) | Leitung Luftfederbalg (2) - Drucksensor (9) | Fig. 1 |
| (31) | Leitung Ausgang Richtungsventil (5) - Stellventile (3, 4) | Fig. 1 |
| (32) | Leitung Luftfederbalg (1) - Stellventil (3) | Fig. 1 |
| (33) | Leitung Luftfederbalg (2) - Stellventil (4) | Fig. 1 |
| (34) | Wechselventil | Fig. 6a |
| (35) | Doppel-Absperrventil | Fig. 6b |
| (36) | Mittelwertventil, pneumatisch wirkend | Fig. 6c |

**Patentansprüche**

1. Mit Druckluft arbeitende Niveauregeleinrichtung für Fahrzeuge mit folgenden Merkmalen:

a) es sind als separate Luftfederbälge (1, 2) ausgebildete pneumatische Druckmittelkammern vorgesehen, die einen Fahrzeugaufbau (27) über Fahrzeugachsen (26) tragen;

b) es ist eine pneumatische Ventileinrichtung (3, 4, 5) vorgesehen, die mit den Luftfederbälgen (1, 2) verbunden ist;

c) die pneumatische Ventileinrichtung (3, 4, 5) ist zur Druckveränderung in den Luftfederbälgen (1, 2) mit einer pneumatischen Druckmittelquelle (6) oder mit einer pneumatischen Druckmittelsenke (7) verbindbar;

d) es sind Sensoren (11) zur Ermittlung der Ist-Abstände zwischen Fahrzeugachsen (26) und dem Fahrzeugaufbau (27) vorgesehen;

e) es ist eine Regeleinrichtung (10, 20) vorgesehen, der wenigstens ein frei wählbarer Soll-Abstand zwischen einer Fahrzeugachse bzw. einer Seite einer Fahrzeugachse (26) und dem Fahrzeugaufbau (27) vorgebbar ist und die die Ventileinrichtung (3, 4, 5) in Abhängigkeit von der Regelabweichung, nämlich der Differenz zwischen dem Soll- und dem Ist-Abstand, steuert;

f) durch Druckveränderungen bzw. durch Veränderung der Luftmenge in den Luftfederbälgen (1, 2) werden die Ist-Abstände gleich den Soll-Abständen;

g) die Regeleinrichtung (20) ist so ausgebildet, daß eine Hilfsgröße aufschaltbar ist;

h) die Hilfsgröße ist als Beladungshilfsgröße (21) ausgebildet und ist zur Kompensation der beladungsabhängigen Reifeneindrückung vorgesehen;

i) die Struktur der Regeleinrichtung ist so ausgebildet, daß sich als Ist-Abstand die Summe zwischen dem Soll-Abstand und der Hilfsgröße einstellt;

k) die Hilfsgröße ist aus einer Größe abgeleitet, welche ein Maß für die Beladung des Fahrzeugs darstellt, und die aufgrund des pneumatischen Drucks in wenigstens einem Luftfederbalg (1, 2) ermittelt ist;

l) die Beladung einer Achse ist aufgrund der pneumatischen Drücke in den dieser Achse zugeordneten Luftfederbälgen ermittelt.

2. Einrichtung nach Anspruch 1, **dadurch gekennzeichnet, daß** als Maß für die Beladung der Achse der Mittelwert (36) der pneumatischen Drücke in den ihr zugeordneten Luftfederbälgen (1, 2) verwendet ist.

3. Einrichtung nach Anspruch 2, **dadurch gekennzeichnet, daß** die Hilfsgröße in Abhängigkeit von dem Maß für die Beladung als kontinuierliche Funktion vorgegeben ist.

4. Einrichtung nach Anspruch 2, **dadurch gekennzeichnet, daß** das Maß der Beladung in mindestens zwei Bereiche unterteilt, und die Hilfsgröße in Abhängigkeit von dem Maß der Beladung als diskontinuierliche Funktion vorgegeben ist.

**5.** Einrichtung nach Anspruch 4, **dadurch gekennzeichnet, daß** jedem Bereich eine diskrete Hilfsgröße zugewiesen ist.

**6.** Einrichtung nach Anspruch 5, **dadurch gekennzeichnet, daß** drei Bereiche vorhanden sind.

**7.** Einrichtung nach Anspruch 3, **dadurch gekennzeichnet, daß** die kontinuierliche Funktion durch stückweise Linearisierung gebildet ist.

**8.** Einrichtung nach Anspruch 7, **dadurch gekennzeichnet, daß** zur stückweisen Linearisierung das Maß der Beladung in mindestens drei Bereiche unterteilt ist.

**9.** Einrichtung nach Anspruch 8, **dadurch gekennzeichnet, daß** drei Bereiche vorhanden sind.

**10.** Einrichtung nach Anspruch 9, **gekennzeichnet durch** die folgenden Merkmale:

a) es ist ein erster Bereich für niedere Maße der Beladung vorgesehen, der zwischen einem Maß der Beladung von 0 und einem unteren Grenzdruck $P_1$ gilt;

b) es ist ein zweiter Bereich für mittlere Maße der Beladung vorgesehen, der zwischen dem unteren Grenzdruck $P_1$ und einem oberen Grenzdruck $P_2$ gilt;

c) es ist ein dritter Bereich für höhere Maße der Beladung vorgesehen, der für alle Maße der Beladung größer dem oberen Grenzdruck $P_2$ gilt.

**11.** Einrichtung nach Anspruch 10, **gekennzeichnet durch** die folgenden Merkmale:

a) im ersten Bereich ist die Hilfsgröße gleich 0 gesetzt;

b) im dritten Bereich ist die Hilfsgröße gleich einem Maximalwert des Reifeneindrückungs-Wertes $R_{MAX}$ gesetzt;

c) im zweiten Bereich ist die Hilfsgröße **durch** eine gerade Strecke gebildet, welche bei 0 an der Stelle, an der das Maß der Beladung gleich dem unteren Grenzdruck $P_1$ ist, beginnt und sich bis zu dem Maximalwert des Reifeneindrückungs-Werts $R_{MAX}$ an der Stelle erstreckt, an der das Maß der Beladung gleich dem oberen Grenzdruck $P_2$ ist.

**12.** Einrichtung nach einem der Ansprüche 1 bis 11, **dadurch gekennzeichnet, daß** zur Ansteuerung eines Tief-Niveaus im Bereich kleiner Soll-Abstands-Vorgaben der Eingriff der den Reifeneindrückungs-Wert kompensierenden Hilfsgröße reduziert ist.

**13.** Einrichtung nach Anspruch 12, **dadurch gekennzeichnet, daß** der Eingriff der Hilfsgröße beginnend mit einer Soll-Abstands-Vorgabe von 0 bis zu einer Soll-Abstands-Vorgabe vom Maximalwert des Reifeneindrückungs-Wertes $R_{MAX}$ reduziert ist, und der Eingriff für alle Soll-Abstands-Vorgaben größer dem Maximalwert des Reifeneindrückungs-Wertes $R_{MAX}$ unverändert bleibt.

**14.** Einrichtung nach Anspruch 13, **dadurch gekennzeichnet, daß** die Reduzierung des Hilfsgrößen-Eingriffs durch einen Faktor erfolgt, der aus dem Quotienten zwischen dem Soll-Abstand und dem Maximalwert des Reifeneindrückungs-Wertes $R_{MAX}$ gebildet wird.

**Claims**

**1.** Compressed air-operated leveling device for vehicles, having the following features:

a) pressure medium chambers for air in the form of separate air bellows (1, 2) are provided, which support a vehicle body (27) above vehicle axles (26);

b) a pneumatic valve device (3,4,5) is provided, which is connected to the air bellows (1, 2);

c) to alter the pressure in the air bellows (1, 2), the pneumatic valve device (3, 4, 5) is arranged to be connected to a pneumatic pressure medium source (6) or to a pneumatic pressure medium sink (7);

d) sensors (11) are provided for detection of the actual distances between vehicle axles (26) and the vehicle body (27);

e) a control device (10, 20) is provided, in which at least one freely selectable set distance between a vehicle axle or one side of a vehicle axle (26) and the vehicle body (27) can be pre-set and which controls the valve device (3, 4,5) in dependence on the control deviation, namely, the difference between the set and actual distance;

f) by changes in pressure or rather by changing the air volume in the air bellows (1, 2), the actual distances become the same as the set distances;

g) the control device (200) is constructed so that an auxiliary variable can be input;

h) the auxiliary variable is in the form of a load auxiliary variable (21) and is provided for compensation of the load-dependent tyre indentation;

i) the structure of the control device is configured so that the sum of the set distance and the auxiliary variable sets itself as actual distance;

k) the auxiliary variable is derived from a variable that represents a measure of the load of the vehicle and which is determined on the basis of the pneumatic pressure in at least one air bellows (1, 2);

l) the load of an axle is determined on the basis of the pneumatic pressures in the air bellows associated with that axle.

2. Device according to claim 1, **characterised in that** the mean value (36) of the pneumatic pressures in the air bellows (1, 2) associated with an axle is used as a measure for the load of the axle.

3. Device according to claim 2, **characterised in that** the auxiliary variable is preset as a continuous function in dependence on the measure for the load.

4. Device according to claim 2, **characterised in that** the measure of the load is subdivided into at least two bands, and the auxiliary variable is preset as a discontinuous function in dependence on the measure of the load.

5. Device according to claim 4, **characterised in that** a discrete auxiliary variable is assigned to each band.

6. Device according to claim 5, **characterised in that** there are three bands.

7. Device according to claim 3, **characterised in that** the continuous function is formed by piece-wise linearisation.

8. Device according to claim 7, **characterised in that** for piece-wise linearisation the measure of the load is subdivided into at least three bands.

9. Device according to claim 8, **characterised in that** there are three bands.

10. Device according to claim 9, **characterised by** the following features:

a) a first band is provided for low measures of the load, which band applies to values between a measure of the load of 0 and a lower limit pressure $P_1$;

b) a second band is provided for medium measures of the load, which band applies to values between the lower limit pressure $P_1$ and an upper limit pressure $P_2$;

c) a third band is provided for higher measures of the load, which band applies to all measures of the load greater than the upper limit pressure $P_2$.

**11.** Device according to claim 10, **characterised by** the following features:

a) in the first band, the auxiliary variable is set to equal 0;

b) in the third band, the auxiliary variable is set to equal the maximum value of the tyre indentation value $R_{MAX}$;

c) in the second band, the auxiliary variable is formed by a straight line, which starts at 0 at the point at which the measure of the load is equal to the lower limit value $P_1$, and extends up to the maximum value of the tyre indentation value $R_{MAX}$ at the point at which the measure of the load is equal to the upper limit pressure $P_2$.

**12.** Device according to any one of claims 1 to 12, **characterised in that** to activate a low level in the band of small distance setpoints, the intervention of the auxiliary value compensating for the tyre indentation value is reduced.

**13.** Device according to claim 12, **characterised in that** the intervention of the auxiliary variable starting with a distance setpoint of 0 up to a distance setpoint of the maximum value of the tyre indentation value $R_{MAX}$ is reduced, and the intervention for all distance setpoints greater than the maximum value of the tyre indentation pressure $R_{MAX}$ remains unchanged.

**14.** Device according to claim 13, **characterised in that** the reduction in the auxiliary variable intervention is effected by a factor that is formed from the quotient of the set distance and the maximum value of the tyre indentation value $R_{MAX}$.

**Revendications**

**1.** Régulateur de niveau à air comprimé pour véhicules présentant les caractéristiques suivantes :

a) des chambres pneumatiques de fluide sous pression réalisées en tant que soufflets à ressort pneumatique distincts (1, 2) sont prévues, qui supportent une carrosserie de véhicule (27) par l'intermédiaire d'essieux (26) ;
b) une soupape pneumatique (3, 4, 5) est prévue, qui est reliée avec les soufflets à ressort pneumatique (1, 2) ;
c) la soupape pneumatique (3, 4, 5) peut être reliée en vue de la variation de pression dans les soufflets à ressort pneumatique (1, 2), à une source de fluide sous pression pneumatique (6) ou à un organe pneumatique d'abaissement de fluide sous pression (7) ;
d) des capteurs (11) sont prévus afin de détecter les écarts de valeur réelle entre les essieux de véhicule (26) et la carrosserie du véhicule (27) ;
e) un régulateur (10, 20) est prévu, pouvant prescrire un écart de consigne pouvant être choisi librement entre un essieu de véhicule ou un côté d'un essieu de véhicule (26) et la carrosserie du véhicule (27), et qui commande la soupape (3, 4, 5) en fonction de l'écart de régulation, à savoir la différence entre l'écart de consigne et de valeur réelle ;
f) par variations de pression ou par variations de la quantité d'air dans les soufflets à ressort pneumatique (1, 2) les écarts de valeur réelle sont rendus identiques aux écarts de valeur de consigne ;
g) le régulateur (20) est réalisé de sorte qu'une grandeur auxiliaire peut être mise en oeuvre ;
h) la grandeur auxiliaire est réalisée en tant que grandeur auxiliaire de charge (21) et est prévue en vue de la compensation de la pression des pneumatiques fonction de la charge ;
i) la structure du régulateur est réalisée de sorte qu'en tant qu'écart de valeur réelle s'établit la somme entre l'écart de valeur de consigne et la grandeur auxiliaire ;
j) la grandeur auxiliaire est dérivée d'une grandeur, qui représente une mesure de la charge du véhicule, et qui est détectée en raison de la pression pneumatique dans au moins un soufflet à ressort pneumatique (1, 2) ;
k) la charge d'un essieu est détectée en raison de la pression pneumatique dans les soufflets à ressort pneumatique associés à cet essieu.

**2.** Dispositif selon la revendication 1, **caractérisé en ce qu'**en tant que mesure pour la charge de l'essieu est utilisée la valeur moyenne (36) des pressions pneumatiques dans les soufflets à ressort pneumatique associés (1, 2).

3. Dispositif selon la revendication 2, **caractérisé en ce que** la grandeur auxiliaire est prescrite en fonction de la mesure pour la charge en tant que fonction continue.

4. Dispositif selon la revendication 2, **caractérisé en ce que** la mesure de la charge est subdivisée en au moins deux zones, et la grandeur auxiliaire est prescrite en fonction de la mesure de la charge en tant que fonction discontinue.

5. Dispositif selon la revendication 4, **caractérisé en ce qu'**à chaque zone est associée une grandeur auxiliaire discrète.

6. Dispositif selon la revendication 5, **caractérisé en ce que** trois zones sont prévues.

7. Dispositif selon la revendication 3, **caractérisé en ce que** la fonction continue est formée par linéarisation segmentée.

8. Dispositif selon la revendication 7, **caractérisé en ce qu'**en vue de linéarisation segmentée la mesure de la charge est subdivisée en au moins trois zones.

9. Dispositif selon la revendication 8, **caractérisé en ce que** trois zones sont prévues.

10. Dispositif selon la revendication 9, **caractérisé par** les caractéristiques suivantes :

   a) une première zone est prévue pour des mesures faibles de la charge, qui s'applique entre une mesure de la charge de 0 et une pression limite inférieure $P_1$ ;
   b) une seconde zone est prévue pour des mesures moyennes, qui s'applique entre la pression limite inférieure $P_1$ et une pression limite supérieure $P_2$ ;
   c) une troisième zone est prévue pour des mesures supérieures de la charge, qui s'applique pour toutes les mesures de la charge supérieures à la pression limite supérieure $P_2$.

11. Dispositif selon la revendication 10, **caractérisé par** les caractéristiques suivantes :

   a) dans la première zone, la grandeur auxiliaire est fixée à 0 ;
   b) dans la troisième zone, la grandeur auxiliaire est fixée égale à une valeur maximale de la valeur de pression des pneumatiques $R_{MAX}$ ;
   c) dans la seconde zone, la grandeur auxiliaire est formée par une allure rectiligne égale à 0 à l'endroit auquel la mesure de la charge est égale à la pression limite inférieure $P_1$, commence et s'étend jusqu'à la valeur maximale de la valeur de pression des pneumatiques $R_{MAX}$ à l'endroit auquel la mesure de la charge est égale à la pression limite supérieure $P_2$.

12. Dispositif selon l'une des revendications 1 à 11, **caractérisé en ce qu'**en vue de la commande d'un niveau bas dans la plage de prescriptions faibles de l'écart de consigne, la mise en oeuvre de la grandeur auxiliaire compensant la valeur de pression des pneumatiques est réduite.

13. Dispositif selon la revendication 12, **caractérisé en ce que** la mise en oeuvre de la grandeur auxiliaire commençant avec une prescription d'écart de consigne de 0 jusqu'à une prescription d'écart de consigne de la valeur maximum de la pression des pneumatiques $R_{MAX}$ est réduite, et la mise en oeuvre pour toutes les prescriptions d'écarts de consigne supérieures à la valeur maximum de la pression des pneumatiques $R_{MAX}$ demeure inchangée.

14. Dispositif selon la revendication 13, **caractérisé en ce que** la réduction de la mise en oeuvre de la grandeur auxiliaire s'effectue par un facteur, qui est formé du quotient entre l'écart de valeur de consigne et la valeur maximum de la valeur de pression des pneumatiques $R_{MAX}$.

# Fig. 1

Elektronik - Regler

Links

Rechts

# Fig. 2

$X_{SL}$  $X^*_{SL}$  $\Delta_L$  Regel-algorithmus L  $Y_L$  Signalum-setzung L  Ventile L

22  23  24  25  5.3  27  11

R  +  −  $X_{IL}$  16,17  P  U  8  1  26

28  Meßwert-normierung L  13

21  Beladungs-hilfsgröße L  15

16  20

EP 0 779 167 B1

# Fig. 3

Sollwert-Toleranzband

# Fig. 5

Fig. 4a

Fig. 4b

Fig. 4c

## Fig. 6a

8

15

29

34

30

## Fig. 6b

8

15

29

35

30

## Fig. 6c

8

15

Mittelwert-
Ventil

29

36

30